Europäisches Patentamt

European Patent Office

Office européen des brevets

(11) Veröffentlichungsnummer: **0 032 183**
**A1**

## (12) EUROPÄISCHE PATENTANMELDUNG

(21) Anmeldenummer: **80107284.4**

(22) Anmeldetag: **21.11.80**

(51) Int. Cl.³: **F 16 K 27/10**

(30) Priorität: **23.11.79 DE 2947169**

(43) Veröffentlichungstag der Anmeldung:
**22.07.81 Patentblatt 81/29**

(84) Benannte Vertragsstaaten:
**BE CH FR LI**

(71) Anmelder: **Schulz & Co. KG**
**Kuhleshütte 85**
**D-4150 Krefeld 13(DE)**

(72) Erfinder: **Kirchkamp, Josef**
**Roonstrasse 9**
**D-4150 Krefeld(DE)**

(74) Vertreter: **Patentanwaltsbüro Cohausz & Florack**
**Postfach 14 01 47**
**D-4000 Düsseldorf 1(DE)**

(54) Verfahren zur Herstellung eines Gehäuses für Ventile, Schieber od. dgl.

(57) Die Erfindung betrifft ein Verfahren zur Herstellung eines Gehäuses für Absperrorgane (Ventile, Schieber), das im wesentlichen die Form eines T-förmigen Rohrstücks (1) hat. In dem Gehäuse ist eine die Dichtfläche aufweisende Platte (4) unterhalb des T-Abgangs schräg eingeschweißt und das Absperrorgan entlang der Achse des T-Abgangs durch die Öffnung in der Platte (4) geführt. Um gute Abdichtung zu erhalten, wird erfindungsgemäß der die Öffnung enthaltende Mittelabschnitt der Platte (4) unter Bildung einer senkrecht zur Achse (6) des T-Abgangs stehenden Fläche (8) ausgeformt. Das T-förmige Rohrstück (1) wird in einer schrägen Ebene getrennt, die Platte (4) in die Teilungsebene zwischen die getrennten T-Rohrstückhälften eingesetzt, und die drei Teile werden durch eine einzige Rundschweißnaht (10) miteinander verbunden.

Fig.1

# COHAUSZ & FLORACK

### PATENTANWALTSBÜRO —

SCHUMANNSTR. 97 · D-4000 DÜSSELDORF

Telefon: (02 11) 68 33 46          Telex: 0858 6513 cop d

PATENTANWALTE:
Dipl.-Ing. W. COHAUSZ  ·  Dipl.-Ing R. KNAUF  ·  Dipl.-Ing. H. B. COHAUSZ  ·  Dipl.-Ing. D. H. WERNER

Schulz & Co. KG

Kuhleshütte 85

4150 Krefeld 13

Verfahren zur Herstellung eines Gehäuses
für Absperrorgane

Die Erfindung betrifft ein Verfahren zur Herstellung eines
Gehäuses für Abpserrorgane, wie Ventile, Schieber od. dgl.,
das durch ein T-förmiges Rohrstück gebildet ist, das in oder
an Rohrleitungen oder Behälter ein- bzw. ansetzbar ist und
das Absperrorgan aufnimmt und in das ein die durch das Absperrorgan verschließbare Öffnung und entlang derselben die
Dichtfläche aufweisendes Blech unterhalb des T-Abgangs derart schräg eingeschweißt ist, daß die Achse des T-Abgangs
durch den Mittelpunkt der Ausnehmung verläuft.

- 2 -

Aus der NL-PS 62 274 ist ein Absperrorgan zum Einbau in Rohrleitungen bekannt, das aus einem zylindrischen Gehäuse besteht, dessen Boden durch eine angeschweißte Platte geschlossen
und in das von oben der Absperrschieber eingesetzt ist. An
diametral gegenüberliegenden Seiten des Gehäuses sind mit
Flanschen versehene Rohrstutzen angeschweißt, an die die Rohre
angeflanscht werden.

Zum Öffnen und Verschließen des Durchgangs durch das Absperrgehäuse ist eine Platte schräg in das Gehäuse eingeschweißt,
die eine mittige Öffnung besitzt, in die ein Rohrstück eingeschweißt ist, in das ebenfalls durch Schweißen eine die Dichtfläche um die mittige Durchgangsöffnung aufweisende Platte befestigt ist, gegen die sich der Schieber in der Schließstellung dichtend anlegt.

Wie die vorstehende Beschreibung dieses bekannten Gehäuses
für Absperrorgane schon zeigt, sind eine Vielzahl von Schweißoperationen erforderlich, um die Vielzahl der das Gehäuse
bildenden Teile miteinander zu verbinden. Die Herstellung der
Einzelteile und die Schweißungen sind mit einem nicht unbeträchtlichen Arbeitsaufwand verbunden. Die bekannte Lösung
hat darüberhinaus den Nachteil, daß die Vielzahl der Schweißnähte auf Dichtheit geprüft werden muß, was zusätzlichen
Arbeitsaufwand verursacht. Hinzukommt, daß Schweißnähte immer
Schwachstellen sind, so daß es von Vorteil ist, ihre Zahl
auf ein Minimum zu begrenzen.

Aufgabe der vorliegenden Erfindung ist es nun, ein Verfahren
anzugeben, durch das es möglich ist, ein Gehäuse für Absperrorgane mit den zugehörigen Einbauten für das Verschließen des
Durchgangs fertigungstechnisch einfacher und damit kostengünstiger herzustellen. Dabei soll das Verfahren auch für die

- 3 -

Herstellung kleinerer Absperrgehäuse anwendbar sein, bei denen
das Einschweißen der Schrägplatte wegen der schlechten Zugänglichkeit in dem engen Innenraum Schwierigkeiten bereitet.

Zur Lösung dieser Aufgabe wird bei einem Verfahren der eingangs
genannten Art erfindungsgemäß vorgeschlagen, daß der die Öffnung
enthaltende Mittelabschnitt des Blechs unter Bildung einer senkrecht zur Achse des T-Abgangs stehenden Fläche ausgeformt, das
T-förmige Rohrstück in einer schrägen Ebene getrennt, das Blech
in die Teilungsebene zwischen die getrennten T-Rohrstückhälften
eingesetzt wird und die drei Teile durch eine einzige Rundschweißnaht miteinander verbunden werden. Dabei soll vorzugsweise das T-förmige Rohrstück durch Aushalsen des Abgangs aus
einem Rohr einstückig hergestellt werden.

Unter "Mittelabschnitt" ist ein mittlerer Abschnitt der Platte
zu verstehen, der von ihrem in einer Ebene liegenden Randabschnitt umgeben wird.

Für die Herstellung des Absperrgehäuses nach dem erfindungsgemäßen Verfahren sind somit praktisch nur zwei Teile erforderlich, nämlich einmal das einstückig hergestellte T-förmige
Außengehäuse und die schräg in das Gehäuse eingesetzte mit
einem einstückig ausgeformten die Dichtfläche aufweisenden
Mittelabschnitt versehene Platte. Sowohl das Außengehäuse als
auch die Platte können praktisch jeweils in einem einzigen
Arbeitsgang hergestellt werden, indem an ein Rohrstück der
T-Abgang ausgehalst und an die ausgestanzte Schrägplatte der
ausgeformte Mittelabschnitt tiefgezogen oder ausgepreßt wird.

Für das Einsetzen der Platte in das Gehäuse sind ebenfalls nur
zwei verhältnismäßig einfache Arbeitsgänge erforderlich, nämlich einmal das glatte Durchtrennen des Gehäuses in einer zur
Achse schrägen Ebene, z.B. durch Sägen, und die Verbindung der

- 4 -

getrennten Gehäusehälften mit zwischengelegter Platte durch
eine einzige Rundscheißnaht. Dabei kann das Zusammenschweißen
der Gehäuseteile und des Blechs auf Schweißautomaten kostengünstig erfolgen. Da die Rundschweißnaht außen liegt, ist eine
einfache Prüfung auf Dichtheit gewährleistet, während dies
bei den meist innenliegenden Schweißnähten des Absperrgehäuses
gemäß NL-PS 62 274 nicht so einfach und sicher durchführbar ist.

Das Gehäuse und die Absperrplatte können wie erläutert aus
Metallblech, aber auch aus Metallguß oder Künststoff hergestellt sein. Die erfindungsgemäß angegebene Verfahrensweise
für den Einbau der Absperrplatte in das Gehäuse ändert sich
hierdurch nicht.

Das in erfindungsgemäßer Weise hergestellte Gehäuse soll nicht
nur für den Einsatz eines Schiebers sondern auch eines Ventils, von Schmutzfängern o. dgl. gestatten, also umfaßendere
Einsatzmöglichkeiten bieten.

Gemäß einer vorteilhaften Ausgestaltung des erfindungsgemäßen
Verfahrens kann um die Öffnung im Mittelabschnitt der Platte
eine Ausstülpung angeformt werden, in die handelsübliche, aber
auch speziell angefertigte, insbesondere verschleißfeste, Ventilsitze, wie solche für Regulierventile, Regelkegel o. dgl.,
eingesetzt, eingeschrumpft, gewindegängig . eingeschraubt,
an- oder eingeschweißt werden. Auf die Ausstülpung lassen sich
aber auch Panzerungen aufschweißen.

Anhand des in der Zeichnung dargestellten Ausführungsbeispiels
soll das erfindungsgemäße Verfahren näher erläutert werden.

Fig. 1    zeigt ein nach dem erfindungsgemäßen Verfahren hergestelltes Absperrgehäuse im Längsschnitt,

Fig. 2    im Querschnitt längs der Linie A-B aus Fig. 1 und

Fig. 3    im Längsschnitt längs der Linie C-D aus Fig. 1,

Fig. 4    ist ein Längsschnitt der Platte in besonderer Formgebung.

Das Gehäuse 1 besteht aus einem nahtlos hergestellten T-Rohrstück mit einem mittig ausgehalsten T-Abgang 2, an den der
das verstellbare Ventil oder den Schieber enthaltende Aufsatz 3
angeflanscht ist. Unterhalb des T-Abgangs 2 ist die Platte 4
als Rohrteiler schräg in das Gehäuse 1 eingeschweißt, wobei
der Mittelpunkt der Durchgangsöffnung 5 in der Platte 4 auf
der Achse 6 des T-Abgangs 2 liegt. Die Durchgangsöffnung 5
entspricht in ihrer Form dem Ventil oder Schieber 7. Die
Dichtfläche kann in der Durchgangsöffnung 5 oder an ihrem
oberen Rand gebildet sein. Die Durchgangsöffnung liegt in
einer ebenen senkrecht zur Achse 6 des T-Abgangs 2 stehenden
Fläche 8, die durch den ausgeformten Mittelabschnitt 9 der
Platte 4 gebildet worden ist.

Das Einsetzen der Platte 4 in das Gehäuse 1 erfolgt in einer
Weise, daß das Gehäuse 1 in einer zu seiner Achse schrägen Ebene
in zwei Hälften durchtrennt, die Platte 4 zwischen die Trennfläche eingelegt wird und die Gehäusehälften und die Platte 4
durch eine einzige Rundschweißnaht 10 miteinander verbunden
werden. Anschließend wird der Aufsatz 3 an dem T-Abgang 2 angeflanscht und das Gehäuse dann, gegebenenfalls über Reduzierungen 11 bzw. 12 an Rohre 13 angeflanscht. Die Reduzierungen
11, 12 sind vorzugsweise an das Gehäuse 1 einstückig angeformt.

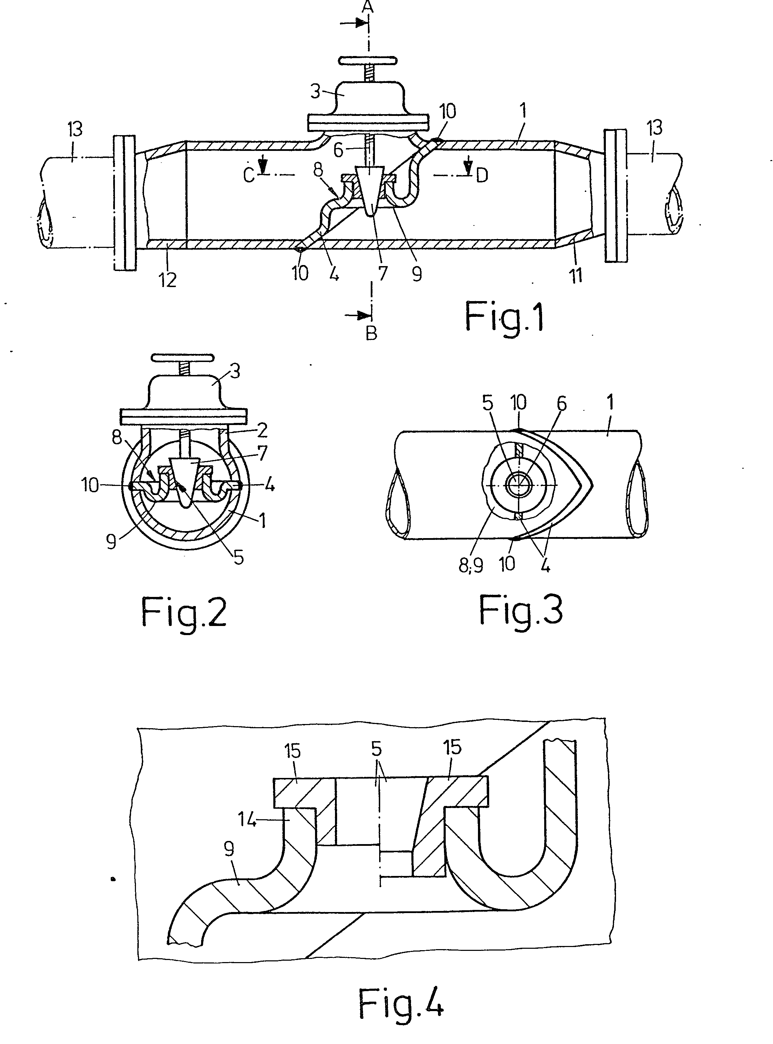

Gemäß Fig. 4 kann um die Öffnung 5 im Mittelabschnitt 9 der Platte 4 für den Eingriff des Ventils oder Schiebers 7 eine Ausstülpung 14, zweckmäßigerweise im selben Arbeitsgang bei der Formgebung der Platte 4, angeformt werden. In die Ausstülpung 14 wird dann der vorzugsweise verschleißfeste zylindrische oder kegelige Ventilsitz 15 eingesetzt, eingeschrumpft, eingeschraubt, an- oder eingeschweißt. Stattdessen kann auch eine Panzerung an- bzw. aufgeschweißt werden.

Die Erfindung soll nicht auf das spezielle in der Zeichnung dargestellte Ausführungsbeispiel beschränkt sein. So sind Variationen des Absperrorgans ebenso möglich wie bei der Art der Anbringung und speziellen Formgebung des Gehäuses.

## COHAUSZ & FLORACK

PATENTANWALTSBÜRO

SCHUMANNSTR. 97 · D-4000 DÜSSELDORF

Telefon · (02 11) 68 33 46                    Telex · 0858 6513 cop d

PATENTANWÄLTE:

Dipl.-Ing. W. COHAUSZ · Dipl.-Ing. R. KNAUF · Dr.-Ing., Dipl.-Wirtsch.-Ing. A. GERBER · Dipl.-Ing. H. B. COHAUSZ

- 7 -

Ansprüche:

1. Verfahren zur Herstellung eines Gehäuses für Absperrorgane, wie Ventile, Schieber od. dgl., das
   durch ein T-förmiges Rohrstück gebildet ist, das
   in oder an Rohrleitungen oder Behälter ein- bzw.
   ansetzbar ist und das Absperrorgan aufnimmt und
   in das eine die durch das Absperrorgan verschließbare Öffnung und entlang derselben die Dichtfläche
   aufweisende Platte unterhalb des T-Abgangs derart
   schräg eingeschweißt ist, daß die Achse des T-Abgangs
   durch den Mittelpunkt der Öffnung verläuft,
   d a d u r c h   g e k e n n z e i c h n e t, daß
   der die Öffnung enthaltende Mittelabschnitt der
   Platte  unter Bildung einer senkrecht zur Achse des
   T-Abgangs stehenden Fläche ausgeformt, das T-förmige
   Rohrstück in einer schrägen Ebene getrennt, die
   Platte in die Teilungsebene zwischen die getrennten
   T-Rohrstückhälften eingesetzt wird und die drei
   Teile durch eine einzige Rundschweißnaht miteinander
   verbunden werden.

- 8 -

2. Verfahren nach Anspruch 1, d a d u r c h  g e k e n n -
   z e i c h n e t, daß der Abgang des T-förmigen Rohrstücks aus einem Rohr ausgehalst wird.

3. Verfahren nach einem der Ansprüche 1 oder 2, d a -
   d u r c h  g e k e n n z e i c h n e t , daß um die
   Öffnung im Mittelabschnitt der Platte eine Ausstülpung
   angeformt wird, in die handelsübliche , aber auch speziell
   angefertigte, insbesondere verschleißfeste, Ventilsitze,
   wie solche für Regulierventile, Regelkegel o. dgl., eingesetzt, eingeschrumpft, gewindegängig  . .eingeschraubt,
   an- oder eingeschweißt werden.

Fig.1

Fig.2

Fig.3

Fig.4

0032183

**0032183**

Nummer der Anmeldung

Europäisches Patentamt

EP 80107284.4

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 638 462 (ARISTODEMO EMILIO SANTAMARIA) <br> + Gesamt + <br> -- | 1,3 |
| A | US - A - 3 630 224 (KALVELAGE) <br> + Fig.1 + <br> -- | 1-3 |
| A | DE - B - 1 045 751 (HANNEMANN) <br> + Fig. 1-3 + <br> -- | 1-3 |
| | AT - B - 156 784 (BREVETTI B.R.A. S.A.) <br> + Fig. 3,4 und 5 + <br> ---- | 1 |

**KLASSIFIKATION DER ANMELDUNG (Int. Cl.³)**

F 16 K 27/10

**RECHERCHIERTE SACHGEBIETE (Int. Cl.³)**

F 16 K 27/00
F 16 K 1/00
F 16 K 25/00
B 21 K 1/00
B 23 K 31/00
B 23 K 33/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 26-01-1981 | BENCZE |

EPA form 1503.1  06.78